Europäisches Patentamt

**European Patent Office**

**Office européen des brevets**

(11) Publication number: **0 172 013**
A2

# EUROPEAN PATENT APPLICATION

(21) Application number: **85305710.7**

(22) Date of filing: **12.08.85**

(51) Int. Cl.⁴: **B 01 D 33/04**

(30) Priority: **14.08.84 GB 8420595**

(43) Date of publication of application:
**19.02.86 Bulletin 86/8**

(84) Designated Contracting States:
**AT BE CH DE FR GB IT LI LU NL SE**

(71) Applicant: **BAKER INTERNATIONAL LIMITED**
**77 South Audley Street**
**London, W1Y 5TA(GB)**

(72) Inventor: **Bradford, Leon Claud**
**7 Grebe Way**
**Huntingdon Cambridgeshire(GB)**

(74) Representative: **Woodin, Anthony John et al,**
**Fitzpatricks Kern House 61/62 Lincoln's Inn Fields**
**London WC2B 6EX(GB)**

(54) **Vacuum filter apparatus.**

(57) Vacuum filter apparatus of the kind comprising an endless conveyor belt, a filter supported by the conveyor belt, a vacuum chamber disposed below the belt and communicating with the filter through apertures in the conveyor belt and in the vacuum chamber, and means for lowering the vacuum chamber from an operative position to a maintenance position, characterised in that the vacuum chamber comprises at least two portions (5, 9), which together define a closed trough, in that the vacuum chamber portions meet at a position where the width of the vacuum chamber is at or near to its maximum dimension, and by means (18, 20) for lowering at least one vacuum chamber portion from its operative position.

EP 0 172 013 A2

Croydon Printing Company Ltd.

./...

FIG.5

- 1 -

## Vacuum Filter Apparatus

The invention relates to vacuum filter apparatus of the kind comprising an endless conveyor belt, a filter supported by the conveyor belt, and a vacuum chamber disposed below the belt and communicating with the filter through apertures in the conveyor belt and in the vacuum chamber. Such aparatus is well-known for extracting liquids from slurries, for example in the production of phosphoric acid from a slurry of phosphate bearing rock and sulphuric acid.

It is known from U.K. Patent No. 2012179B of Esmil SpA to provide vacuum filter belt apparatus comprising a continuous belt movable by driving means along a continuous path which includes an operative path portion at which apertures through the moving belt communicate with at least one vacuum chamber extending beneath the belt, whereby suction filtering of material on the belt is effected, a longitudinal side wall of said vacuum chamber comprising at least one removable panel extending over substantially the whole length of the chamber.

It is an object of the invention to improve still further access to the interior of the vacuum chamber to facilitate cleaning of the chamber.

It is a further object of the invention to provide vacuum filter apparatus adapted for use in severe operating conditions such for example as in the production of phosphoric acid by the hemihydrate process where the problem of scaling is increased by the unstable nature of this form of calcium sulphate and the problem of corrosion is increased by the high process temperature and acid concentrations as compared with the dihydrate process.

According to the invention, vacuum filter apparatus of the kind comprising an endless conveyor belt, a filter supported by the conveyor belt, a vacuum chamber disposed below the belt and communicating with the filter through apertures in the conveyor belt and in the vacuum chamber, and means for lowering the vacuum chamber from an operative position to a maintenance position is characterised in that the vacuum chamber comprises at least two portions which together define a closed trough, in that the vacuum chamber portions meet at a position where the width of the vacuum chamber is at or near to its maximum dimension, and by means for lowering at least one vacuum chamber portion from its operative position.

One vacuum chamber portion may define a trough and another vacuum chamber portion may define a lid for the

trough, and preferably the vacuum chamber portion defining the trough is a lower portion and the vacuum chamber portion defining the lid for the trough is an upper portion. Preferably the lower portion comprises a pair of substantially vertical walls united at their lower edges by at least one sloping wall portion, and preferably by a pair of oppositely directed downwardly sloping wall portions.

The lower portion may be formed with a pair of outwardly directed flanges at its top and on which the upper portion is arranged to seat. Preferably the upper portion comprises a pair of flanges adapted to cooperate with those of the lower portion to close the chamber.

Preferably the upper portion carries at least one longitudinal wear strip for the belt and if desired the upper portion may carry a parallel mutually spaced pair of wear strips, between which are arranged apertures in the lid which communicate with the interior of the vacuum chamber.

Preferably the stiffness of the lower portion of the vacuum chamber is increased by uniting water pipes for lubricating the conveyor belt with the lower portiom so that the water pipes form structural members.

Preferably means is provided for lowering the vacuum chamber from its working position for the purpose of facilitating access during maintenance. Means is known for this purpose and which comprises a series of jacks by which the vacuum chamber is lowered vertically downwards. To improve access still further there is provided a series of pivoted arms on which the vacuum chamber is supported, the pivotal mountings of the arms being disposed to one side of the chamber so that on lowering the vacuum chamber it is tipped sideways. The levers may be bell-crank levers which are preferably actuated by screw jacks. To ensure easy repositioning, resetting and alignment of the vacuum chamber it is preferred that the vacuum chamber is held in its working position against the machine frame by locking means comprising adjustable abutment members.

The invention is diagrammatically illustrated by way of example in the accompanying drawings, in which:

Figure 1 is a schematical longitudinal side view of known filter belt apparatus to which the invention is applicable;

Figure 2 is a scrap perspective cross-sectional view of part of vacuum filtering apparatus of the invention;

Figure 3 is an exploded scrap perspective cross-sectional view similar to that of Figure 2;

Figure 4 is a cross-sectional end elevation of a detail of the apparatus of Figures 2 and 3; and

Figure 5 is a cross-sectional end elevation of the apparatus of Figures 2 to 4 and showing the means for lowering the vacuum chamber from its working position.

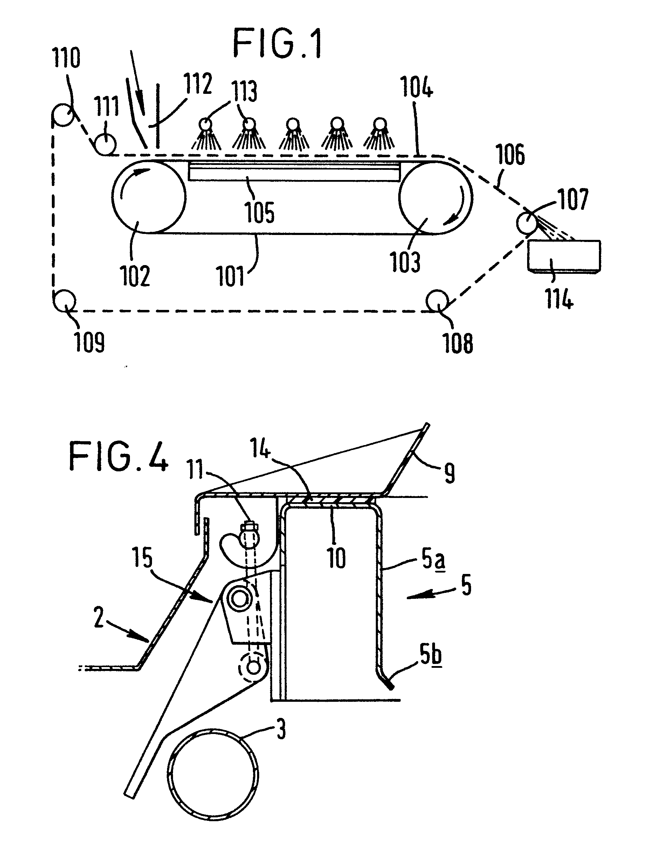

In Figure 1 of the drawings there is shown a vacuum belt filter apparatus of the kind generally described in U.K. Patent Specification No. 2012179B of Esmil SpA. The apparatus of Figure 1 has an endless belt 101 made of rubber reinforced with canvas. In this particular embodiment, this belt is about 2.5 m in width and about 21 m in length. The belt is guided over turning rolls 102 and 103, at least one of which is driven by a driving mechanism, not shown here.

The top horizontal run 104 of the path of the belt 101 is its operative path portion beneath which there is a vacuum chamber 105 which is connected to a vacuum pump at several points.

An endless filtercloth 106 extends over and is guided by a plurality of rolls 107 to 111, in such a way that it follows the same path between rolls 102 and 103 as belt 101.

Slurry material to be treated is deposited onto the filtercloth by a feedbox 112 and if desired may subsequently be wetted by means of a plurality of spraying nozzles 113, the number of which in use is determined for the process being performed. The liquid sprayed also depends on the process. The washed slurry or cake lying on the filtercloth is dumped into a collecting tank 114 at the location of the guide roll 107. During the further progress of the belt 101 and the filtercloth 106, both can be cleaned and freed of incrustation as required.

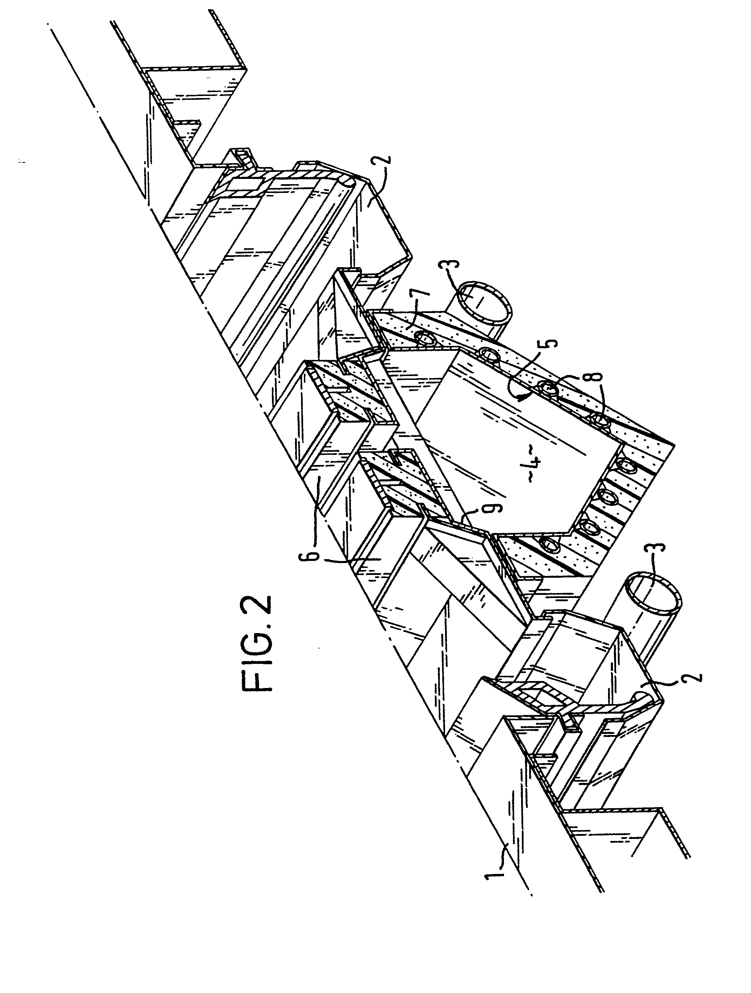

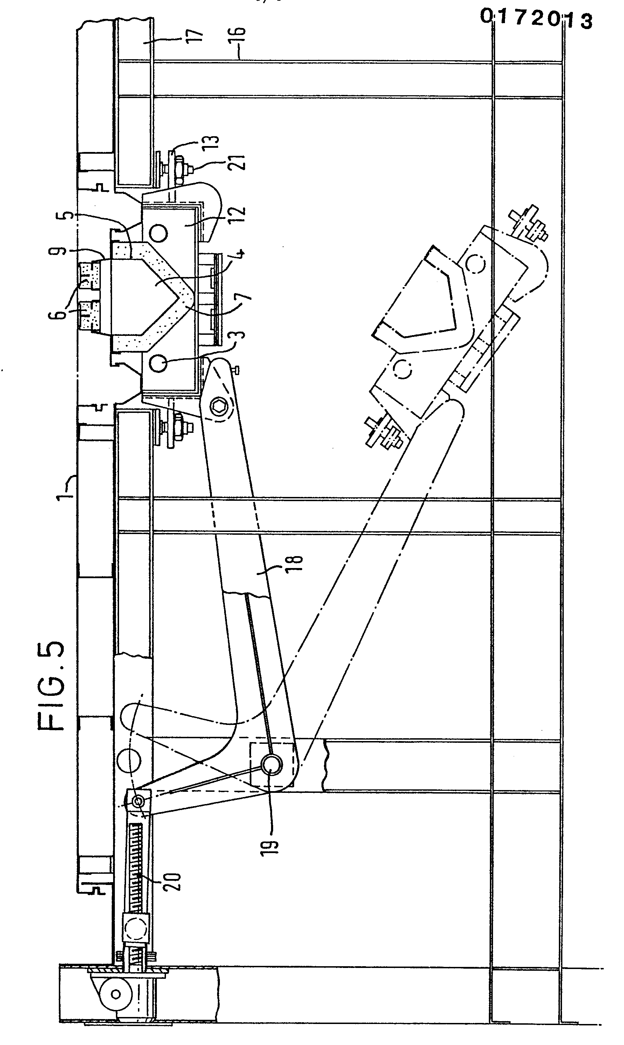

The apparatus of the invention (Figures 2 to 5) comprises a horizontal table 1 for supporting the conveyor belt, the table being formed with a pair of gutters 2 between which is disposed a vacuum chamber 4 which comprises a lower portion or trough 5 and an upper portion or lid 9. The lower poriton consists of a pair of generally vertical walls 5a and a pair of inwardly sloping walls 5b, preferably made as a continuous pressing, the tops of the vertical walls 5a being surmounted by outwardly directed flanges 10 which carry sealing gaskets 14. The upper portion or lid 9 is formed with a central portion which carries on its upwardly directed surface a pair of parallel spaced apart wear strips 6, e.g. of a plastics such as high density polyethylene between which are formed apertures so that communication may be established between the vacuum chamber and the slurry on the conveyor belt. The wear stips are accommodated in channels which afford the strips limited longitudinal sliding movement permitting thermal expansion. The lid 9 is also formed with a pair of outwardly directed flanges 11 which are arranged to coact with the flanges 10 on the trough 5 to close the vacuum chamber, the gasket 14 being trapped between the flanges 10 and 11 to provide a gas tight seal. The lid 9 is held against the trough 5 by means of a series of quick release toggle clamps 15 generally indicated in Figure 4 of the drawings.

The whole of the outer surface of the lower portion or trough 5 is covered by a layer of insulating material 7 in which are embedded heating pipes 8 e.g. steam heating pipes.

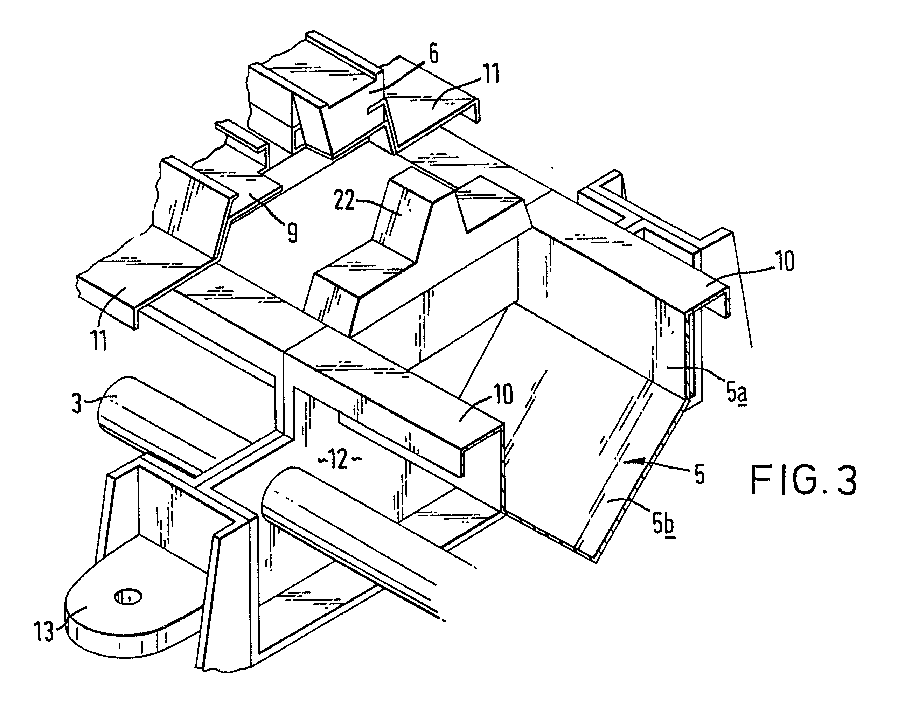

As can be seen in Figure 3 of the drawings the trough 5 comprises a number of trough portions connected end to end to form a vacuum chamber of the required length, the ends of the trough portions being formed with vertical flang-like brackets 12 by which the trough sections are joined together, e.g. by bolts (not shown), the brackets 12 also carrying water pipes 3 which feed lubricating water to the wear strips 6, the arrangement being such that the water pipes 3 form structural members which help to stiffen the vacuum chamber assembly. The brackets 12 also carry lugs 13 by means of which the vacuum chamber assembly is secured in position on the machine frame.

Similarly the lid 9 is formed as a number of portions, one being provided for each trough portion. The ends of the lid portions are sealed by shaped members 22 provided at the joints between adjacent trough portions.

In Figure 5 of the drawings it will be seen that the machine frame comprises upright members 16 and horizontal members 17 which support the table 1, the vacuum chamber assembly being secured to the under surface of the horizontal members 17 by means of adjustable captive locking bolts 21 which ensure that repositioning, resetting and alignment of the vacuum chamber can be readily achieved. To facilitate maintenance of the vacuum chamber it is mounted on a series of bell-crank levers 18 which are pivoted on the machine frame at 19 and actuated by screw jacks 20 so that the vacuum chamber can be swung from the operative position shown in full lines in the drawing to the maintenance position shown in dotted lines in the drawing in which the vacuum chamber is tilted to one side to further facilitate access for maintenance. In the dotted line position it will be noted that the lid or upper portion 9 of the vacuum chamber has been removed from the vacuum chamber assembly so that the interior of the trough 5 is exposed. Since the upper and lower portions of the vacuum chamber are joined together along the widest dimension of the vacuum chamber it is easy to insert cleaning tools into the trough for maintenance.

The invention thus provides a vacuum chamber which is more readily accessible for maintenace than known designs, which by its construction permits better thermal insulation, which permits construction of the trough as a one piece pressing so that welding is avoided and which reduces scaling due to impediments to flow, e.g. inspection hatches or welds, in the trough. Also the modular construction of the vacuum chamber permits wear or other problems to be dealt with easily since the trough or lid sections can easily be replaced. Furthermore wear in the wear strips can be equalised by periodical repositioning of the wear strips from a position in which high wear rates are to be expected to a position where the wear rate is less severe.

- 10 -

Claims

1.      Vacuum filter apparatus of the kind comprising an endless conveyor belt, a filter supported by the conveyor belt, a vacuum chamber disposed below the belt and communicating with the filter through apertures in the conveyor belt and in the vacuum chamber, and means for lowering the vacuum chamber from an operative position to a maintenance position, characterised in that the vacuum chamber (4) comprises at least two portions (5, 9) which together define a closed trough, in that the vacuum chamber portions meet at a position where the width of the vacuum chamber is at or near to its maximum dimension, and by means (18, 20) for lowering at least one vacuum chamber portion from its operative position.

2.      Vacuum filter apparatus according to claim 1, characterised in that a vacuum chamber lower portion (5) defines a trough and in that a vacuum chamber upper portion (9) defines a lid for the trough.

3.      Vacuum filter apparatus according to claim 2, characterised in that the lower portion defines a trough having a pair of substantially vertical walls (5a) united at their lower edges by at least one sloping wall portion (5b).

4.       Vacuum filter apparatus according to claim 3, characterised in that substantially the whole of the external surface of the trough is covered by a layer of a thermal insulant (7), in that heating means (8) on the external surface of the trough extends over substantially the whole of the external surface, and in that the heating means comprise fluid filled pipes buried in the thermally insulating layer.

5.       Vacuum filter apparatus according to claim 2 or claim 3 or claim 4, characterised in that the lower portion is formed with a pair of outwardly directed flanges (10) at its top and on which the upper portion is arranged to seat by means of a pair of flanges (11) on said upper portion adapted to cooperate with the outwardly directed flanges of the lower portion to close the vacuum chamber.

6.       Vacuum filter apparatus according to any one of claims 2 to 5, characterised in that the upper portion carries a parallel mutually spaced pair of wear strips (6) for the conveyor belt, between which wear strips are arranged apertures which communicate with the interior of the vacuum chamber, and in that the wear strips are secured to the upper portion by pairs of oppositely directed members which define channels in which the wear strips are capable of limited longitudinal movement for the purpose of permitting thermal expansion.

7.      Vacuum filter apparatus according to claim 6, characterised in that the wear strips are positioned on the upper portion to provide a thermally insulating layer for the upper  portion.

8.      Vacuum filter apparatus according to any one of claims 2 to 7, characterised by water pipes (3) for lubricating the conveyor belt, the water pipes being connected to the trough defining portion of the vacuum chamber to form structural members which increase the stiffness of the portion.

9.      Vacuum filter apparatus according to any preceding claim. characterised in that the means for lowering the vacuum chamber from its working position comprises a series of pivoted arms (18) on which the vacuum chamber is mounted, the pivtal mountings of the arms being disposed to one side of the vacuum chamber so that on lowering the vacuum chamber it is tipped sideways.

10.     Vacuum filter apparatus according to claim 9, characterised in that the pivoted arms are bell-crank levers (18) actuated by screw jacks (20).

11.     Vacuum filter apparatus according to any preceding claim characterised in that the vacuum chamber is held in its working position against the machine frame by locking means (21) comprising adjustable abutment members.

# FIG.1

# FIG.4

# FIG. 2

6

2

1

7

3

9

~4~

5

8

3

2

FIG.3

FIG.5